# EUROPÄISCHE PATENTSCHRIFT

(11) **EP 0 813 778 B1**
(45) Veröffentlichungstag und Bekanntmachung des Hinweises auf die Patenterteilung: **16.02.2005**
(21) Anmeldenummer: 96946010.4
(22) Anmeldetag: 25.11.1996
(51) Int. Cl.: H04H 1/00, H04J 3/16

(54) **Verfahren zum dynamisch Rekonfigurieren eines Multiplexsignals**
A dynamic multiplex reconfiguration process
Procédé de réconfiguration dynamique d'un signal multiplexé

(30) Priorität: 04.01.1996 DE 19600177
(43) Veröffentlichungstag der Anmeldung: 29.12.1997
(73) Patentinhaber: ROBERT BOSCH GMBH, 70442 Stuttgart (DE)
(72) Erfinder: HALLIER, Jürgen, D-31188 Holle (DE); LAUTERBACH, Thomas, D-31139 Hildesheim (DE)
(86) Internationale Anmeldenummer: PCT/DE1996/002258
(87) Internationale Veröffentlichungsnummer: WO 1997/025791

(56) Entgegenhaltungen:
- EP-A- 0 565 470
- DE-A- 4 013 204
- DE-C- 4 425 973
- FR-A- 2 405 598
- ETS 300401, Radio Broadcasting Systems; Digital Audio Broadcasting (DAB) to mobile, portable and fixed receivers, February 1995, S. 41-42 und 51-52

## Beschreibung

Die Erfindung geht von einem Verfahren zur Übertragung von Daten von einem Sender zu mindestens einem Empfänger nach der Gattung des Hauptanspruchs aus.

### Stand der Technik

Breitbandige digitale Rundfunksysteme, wie z.B. DAB (= Digital Audio Broadcasting) bieten aufgrund ihrer hohen Datenrate die Möglichkeit, mehrere Programme und/oder Datendienste gemultiplext zu übertragen. Die Aufteilung der Gesamtkapazität auf die einzelnen Programme kann während des Betriebs verändert werden (dynamische Rekonfigurierbarkeit). In der Druckschrift Eureka 147-DAB II, Dokument WG3-93.14a (Th. Wächter, Deutsche Bundespost Telecom) wird die flexible Aufteilung der verschiedenen Programmanbietern von einem Netzbetreiber zugeteilten Gesamtübertragungskapazität beschrieben, wobei die Programmanbieter die Aufteilung der ihnen zugeteilten Gesamtkapazität beliebig auf verschiedene Programme oder Datendienste von sich aus und ohne Rücksicht auf andere Programmanbieter vornehmen können. Dies wird als "virtueller Netzbetrieb" bezeichnet. Eine Realisierung wird jedoch nicht vorgeschlagen.

In der Veröffentlichung "Radio broadcasting systems; Digital Audio Broadcasting (DAB) to mobile, portable and fixed receivers" (ETS 300 401) des European Telecommunications Standards Institute (ETSI), veröffentlicht im Februar 1995, wird auf den Seiten 41 und 42 sowie 51 und 52 die Multiplex Configuration Information (MCI) für ein DAB-Ensemble beschrieben. Ebenso wird die Multiplex re-configuration ohne Unterbrechung des Sendedienstes beschrieben, indem der genaue Zeitpunkt der re-configuration mitgeteilt wird und die Zeit zwischen zwei CIFs hierzu genutzt wird.

### Vorteile der Erfindung

Das erfindungsgemäße Verfahren ermöglicht "virtuellen Netzbetrieb", d.h. die eigenständige Unterteilung des den Quellen fest zugewiesenen Datenaufkommens auf mehrere Datenströme ohne Rücksicht auf mögliche weitere Quellen. Es können Änderungen der Datenaufkommen einzelner Datenströme einer Quelle vorgenommen werden, ohne daß eine Synchronisation zwischen dem Sender und den Quellen bzw. unter den Quellen untereinander nötig ist. Daraus ergeben sich die weiteren Vorteile, daß keine Rückleitungen vom Sender zu den Quellen erforderlich sind und, daß darüberhinaus eine Verständigung der Quellen untereinander entbehrlich ist.
In den Ansprüchen 2 und 3 sind Randbedingungen angegeben, die eine optimale Ausnutzung der verfügbaren Übertragungskapazität dadurch ermöglichen, daß die Reduzierung des Datenaufkommens eines Datenstroms zu einem möglichst späten, die Erhöhung des Datenaufkommens eines weiteren Datenstroms zu einem möglichst frühen Zeitpunkt ermöglicht wird.
Durch die Weiterbildungen des erfindungsgemäßen Verfahrens gemäß der Ansprüche 4 und 5 lassen sich die zeitlichen Abläufe beim "virtuellen Netzbetrieb" weiter optimieren, so daß das jeder Quelle zur Verfügung stehende Gesamtdatenaufkommen optimal genutzt werden kann, und unnötige Verzögerungen bei der Rekonfigurierung der Datenaufkommen der einzelnen Datenströme vermieden werden können.

### Zeichnungen

Ausführungsbeispiele der Erfindung sind in der Zeichnung dargestellt und in der nachfolgenden Beschreibung näher erläutert.

Es zeigen Figur 1 eine Grundkonfiguration zur Durchführung des erfindungsgemäßen Verfahrens, Figur 2 ein Beispiel für die Aufteilung der verfügbaren Übertragungskapazität auf zwei Quellen zu drei verschiedenen Zeitpunkten und Figur 3 ein Beispiel für den zeitlichen Ablauf des erfindungsgemäßen Verfahrens.

### Beschreibung der Erfindung

Ein geeignetes Verfahren zur Realisierung des "virtuellen Netzbetriebs" z. B. beim DAB-System wird im folgenden beschrieben. Es läßt sich jedoch prinzipiell auch auf andere drahtgebundene Systeme oder Funksysteme zur Übertragung von Daten ausdehnen.

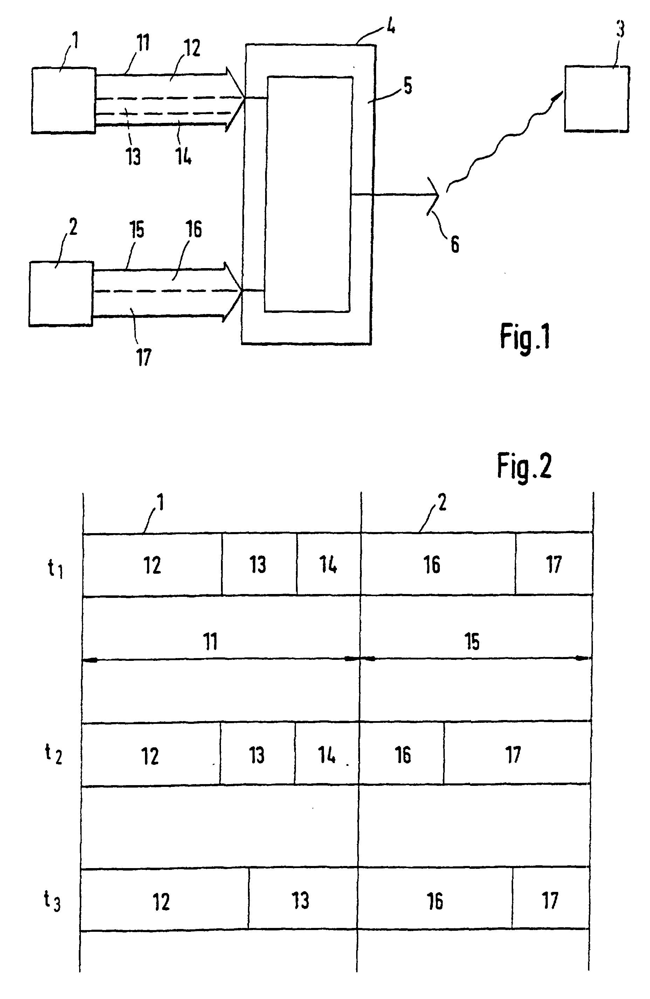

Ausgangspunkt der folgenden Betrachtungen ist beispielsweise eine Konfiguration gemäß Figur 1, bestehend aus einem Sender 4 mit einem Datenmultiplexer 5, dem von einer oder mehreren Quellen 1, 2 jeweils ein oder mehrere Datenströme 12, 13, 14 sowie 16 und 17 mit individuellen Datenaufkommen über dafür vorgesehene Datenkanäle zugeführt werden, wobei jeder Quelle ein Gesamtdatenaufkommen 11, 15 für einen bestimmten Zeitraum fest zugeordnet ist. Im Falle des DAB-Systems entsprechen dabei der Sender dem Netzbetreiber, die Quellen z. B. den Programmanbietern und die Datenströme den verschiedenen Programmen oder Datendiensten der Programmanbieter. Dem Multiplexer des Senders kommt die Aufgabe zu, die Daten bei beispielsweise rahmenorientierter Übertragung dem passenden Datenpaket, das z. B. einem bestimmten Programm oder Datendienst entspricht, zuzuordnen. Die vom Sender ausgestrahlten Datenrahmen werden von einem oder mehreren Empfängern 3 empfangen, demultiplext, wobei die verschiedenen Datenpakete eines Rahmens wieder den verschiedenen Programmen zugeordnet werden, und ausgewertet.

In Figur 2 ist beispielhaft die Aufteilung der zwei Programmanbietern 1, 2 jeweils fest zugeteilten Gesamtübertragungskapazität 11, 15 auf jeweils mehrere Programme und/oder Datendienste 12, 13, 14 und 16, 17 zu drei verschiedenen Zeitpunkten t₁, t₂ und t₃ dargestellt. Zum Zeitpunkt t₁ überträgt der Programmanbieter 1 drei Programme 12, 13, 14 mit jeweils bestimmten Datenaufkommen, der Programmanbieter die beiden Programme 16 und 17. Bei den Programmen kann es sich auch ganz oder teilweise um Datendienste handeln. Zum Zeitpunkt t₂ hat der Programmanbieter 2 das Datenaufkommen des Programms 16 reduziert und gleichzeitig das Datenaufkommen des Programms 17 erhöht. Zum Zeitpunkt t₃ hat der Programmanbieter 2 die Datenaufkommen seiner Programme 16 und 17 auf die ursprünglichen Datenraten zum Zeitpunkt t₁ umgeschaltet, während der Programmanbieter 1 gleichzeitig das Programm 14 abgeschaltet hat, so daß mit Hilfe der ursprünglich dem Programm 14 zur Verfügung stehenden Übertragungskapazität bei den Programmen 12 und 13 höhere Datenaufkommen realisiert werden können.

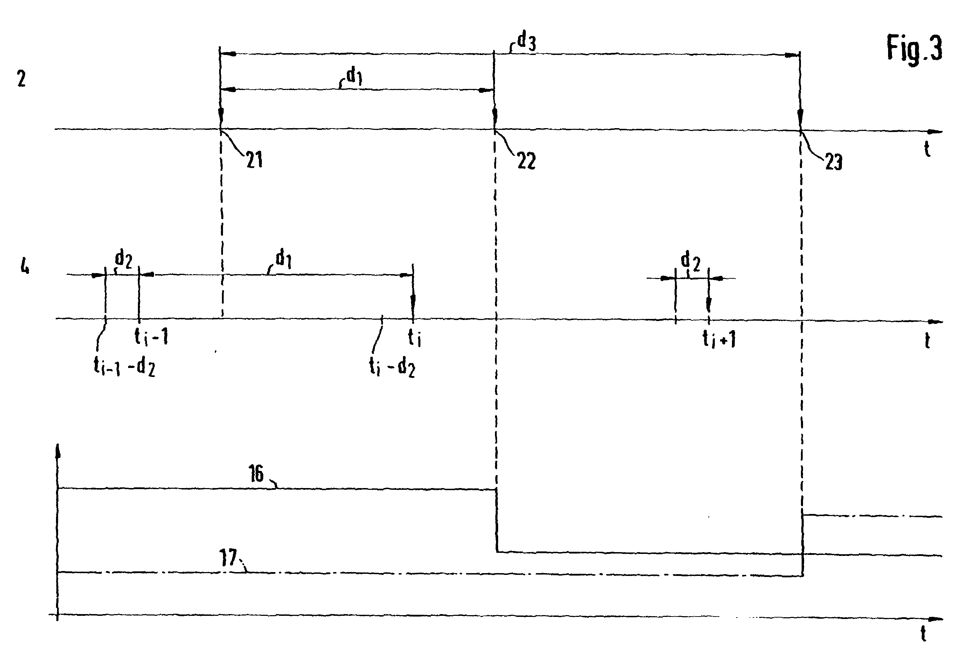

Der Ablauf des erfindungsgemäßen Verfahrens wird im folgenden anhand der Figur 3 beschrieben.

Um die einwandfreie Funktion der Empfänger sicherzustellen, muß diesen bei Änderung des Datenaufkommens eines Programms neben der gegenwärtigen auch die zukünftige Aufteilung der Übertragungskapazität sowie der Zeitpunkt (z.B. Datenrahmennummer), ab dem die Änderung gültig ist, mitgeteilt werden. Diese Mitteilung erfolgt über einen separaten Informationskanal, kann aber z. B. auch mit dem Multiplexsignal übertragen werden. Die Ankündigung einer solchen Änderung muß um einen bestimmten Zeitabschnitt d₁ vor dem Inkrafttreten der Änderung erfolgen. Neben dem Multiplexer des Senders sind von einer solchen Änderung auch die Datenströme der Quelle betroffen, die gleichzeitig mit der Änderung der Multiplexkonfiguration auf ihre neuen Datenaufkommen umgestellt werden müssen.

Dabei sind nun folgende Probleme zu bewältigen. Zum einen muß gewährleistet sein, daß die Quellen der Programmanbieter zum richtigen Zeitpunkt auf die neuen Datenaufkommen umgeschaltet werden, ohne daß Rückleitungen vom Netzbetreiber zu den Anbietern vorhanden sein müssen. Außerdem müssen Umkonfigurationsankündigungen zweier oder mehrerer voneinander unabhängiger Programmanbieter bewältigt werden, die beim Netzbetreiber in einem kürzeren Zeitabstand als d₁ eintreffen, ohne daß die einzelnen Programmanbieter aufeinander Rücksicht nehmen müssen.

Für eine ordnungsgemäße Funktion des Verfahrens wird vorausgesetzt, daß Rekonfigurationen des Multiplexsignals beim Netzbetreiber nur zu diskreten Zeitpunkten t[i], i=0, 1, 2,... in Abständen d₁ vorgenommen werden. Da die Zeitdauer d₁ z. B. bei DAB nur wenige Sekunden beträgt, ist diese Einschränkung für die Praxis unerheblich. Eine Synchronisierung der Programmanbieter untereinander und mit dem Netzbetreiber ist dann entbehrlich, wenn die Programmanbieter die Forderung erfüllen, daß sie eine gewünschte Änderung des Datenaufkommens eines oder mehrerer Datenströme und damit die gewünschte Rekonfiguration des Multiplexsignals um die Zeit d₁ vor dem Zeitpunkt dem Netzbetreiber ankündigen, zu dem sie erfolgen soll. Eine Ankündigung der Änderung der Datenrate vom Sender an den Empfänger erfolgt zum Zeitpunkt tᵢ und die Änderung der Datenrate durch den Sender zum darauffolgenden diskreten Zeitpunkt tᵢ₊₁ genau dann, wenn der Rekonfigurationswunsch der betroffenen Quelle in der Zeitspanne tᵢ₋₁-d₂ bis tᵢ-d₂ beim Sender eintrifft. Bei d₂ handelt es sich dabei um systembedingte Verzögerungen, wie z. B. die Reaktionszeit des Senders, den Zeitraum für eine korrekte Veränderung der Quelldatenrate und Verzögerungen, die sich z. B. bei DAB aus der Zeitverwürfelung der Daten ergeben.

Für den Fall, daß der Quelle das Zeitraster des Senders bekannt ist, genügt es für eine einwandfreie Funktion des Verfahrens, wenn die Quelle ihre Datenrate spätestens nach der Zeit d₁ nach Ankündigung der Rekonfigurierung auf den angegebenen Wert reduziert. Im Gegenzug darf die Erhöhung der Datenrate eines weiteren Datenstroms derselben Quelle frühestens nach Ablauf einer Zeit d₃ (= 2d₁+d₂) nach Ankündigung der Rekonfigurierung der Datenrate vorgenommen wird.

In Figur 3 ist anhand eines Beispiels der Ablauf des Verfahrens dargestellt. Der Programmanbieter 2 möchte die Datenaufkommen seiner Programme 16, 17 ändern, wobei das Datenaufkommen des ersten Programms 16 erniedrigt, das Datenaufkommen des zweiten Programms 17 erhöht werden soll. Der Programmanbieter kündigt zu diesem Zweck dem Netzbetreiber den Wunsch zur Änderung der Datenaufkommen seiner Programme zu einem Zeitpunkt 21 an, der im Zeitintervall tᵢ₋₁-d₂ bis tᵢ-d₂ liegt. Gemäß dem oben gesagten wird dieser Änderungswunsch vom Netzbetreiber zum diskreten Zeitpunkt tᵢ an den Empfänger weitergegeben und zum diskreten Zeitpunkt tᵢ₊₁ die Rekonfiguration des Multiplexsignals zur Anpassung des Multiplex an die veränderten Datenaufkommen der Programme des Programmanbieters durchgeführt. Entsprechend der Forderung, daß die Reduktion der Datenrate eines Datenstroms seitens des Programmanbieters spätestens nach Ablauf einer vorgegebenen Zeit d₁ nach Ankündigung des Änderungswunsches zu erfolgen habe, reduziert der Programmanbieter das Datenaufkommen des Programms 16 zu einem gegenüber dem Zeitpunkt 21 um d₁ verschobenen Zeitpunkt 22. Die Erhöhung des Datenaufkommens des zweiten Datenstromes 17 erfolgt zu einem Zeitpunkt 23, der gegenüber der Änderungsankündigung um die Zeit d₃=2d₁+d₂ verschoben ist. Die Anpassung der Datenaufkommen der Programme durch den Programmanbieter ist im untersten Diagramm der Figur 3 dargestellt.

## Patentansprüche

1. Verfahren zur Übertragung von Daten von einem Sender (4) zu mindestens einem Empfänger (3) , wobei der Sender (4) über ein festes Zeitraster (t[i], i=0, 1, 2,...) verfügt, wobei mehrere Datenströme (12, 13, 14, 16, 17) aus unterschiedlichen Quellen (1,2) vom Sender (4) übertragen werden, und wobei die Datenaufkommen der Datenströme (12, 13, 14, 16, 17) unterschiedlich verteilt sind und die Datenaufkommen der Datenströme (12, 13, 14, 16, 17) aus unterschiedlichen Quellen (1, 2)ohne Rücksicht auf mögliche weitere Quellen (1, 2) geändert werden können, **dadurch gekennzeichnet, daß** bei Änderung des Datenaufkommens eines Datenstromes (12, 13, 14, 16, 17) die Änderung des Datenaufkommens dem Sender (4) vor dem Zeitpunkt der Änderung (22) angekündigt wird, daß die Ankündigung (21) über die Änderung des Datenaufkommens des Datenstromes (12, 13, 14, 16, 17) vom Sender (4) mit dem nächsten Übertragungsabschnitt (22) nach dem Eintreffen der Ankündigung von der Quelle (21) ausgestrahlt wird, und daß eine Reduktion des Datenaufkommens spätestens nach einer vorgegebenen Zeit (d₁) nach der Ankündigung vorgenommen wird, wobei die vorgegebene Zeit (d₁) durch das feste Zeitraster des Senders (4) bestimmt wird.

2. Verfahren nach Anspruch 1, **dadurch gekennzeichnet, daß** zur Ausstrahlung der Änderungsankündigung durch den Sender (4) im nächsten Übertragungsabschnitt die Änderungsankündigung mindestens um eine zweite Zeit (d₂) vor Beginn des nächsten Übertragungsabschnittes an den Sender (4) übertragen wird, wobei die zweite Zeit (d₂) die Summe aller systembedingten Verzögerungen ist.

3. Verfahren nach einem der Ansprüche 1 oder 2, **dadurch gekennzeichnet, daß** eine Erhöhung des Datenaufkommens eines zweiten Datenstromes (17) derselben Quelle (1,2) frühestens um eine dritte Zeit (d₃) nach der Ankündigung der Änderung des Datenaufkommens (21) durch die Quelle (1,2) vorgenommen wird, wobei sich die dritte Zeit (d₃) aus dem doppelten der vorgegebenen Zeit (d₁) und der zweiten Zeit (d₂) zusammensetzt.

4. Verfahren nach einem der Ansprüche 1 bis 3, **dadurch gekennzeichnet, daß** der/den Quellen (1,2) die vorgegebene Zeit (d₁), und die Länge des Zeitrasters (t[i], i= 0, 1, 2,...) des Senders bekannt ist.

5. Verfahren nach einem der Ansprüche 2 bis 4, **dadurch gekennzeichnet, daß** der/den Quellen (1,2) die zweite Zeit (d₂) bekannt ist.

## Claims

1. Method for transmission of data from a transmitter (4) to at least one receiver (3) with the transmitter (4) having a fixed time frame (t[i], i=0, 1, 2,...), with two or more data streams (12, 13, 14, 16, 17) from different sources (1, 2) being transmitted by the transmitter (4) and with the data traffic being distributed differently in the data streams (12, 13, 14, 16, 17) in which case the data traffic in the data streams (12, 13, 14, 16, 17) from different sources (1, 2) can be changed ignoring possible further sources (1, 2) **characterized in that**, when the data traffic in a data stream (12, 13, 14, 16, 17) is changed, the change in the data traffic is notified to the transmitter (4) before the time of the change (22), **in that** the notification (21) about the change to the data traffic in the data stream (12, 13, 14, 16, 17) is transmitted by the transmitter (4) with the next transmission section (22) after the arrival of the notification from the source (21), and **in that** the data traffic is reduced at the latest following a predetermined time (d₁) after the notification, with the predetermined time (d₁) being determined by the fixed time frame of the transmitter (4).

2. Method according to Claim 1, **characterized in that**, in order to transmit the change notification from the transmitter (4) in the next transmission section, the change notification is transmitted at least a second time (d₂) before the start of the next transmission section to the transmitter (4), with the second time (d₂) being the sum of all the system-dependent delays.

3. Method according to one of Claims 1 or 2, **characterized in that** the data traffic in a second data stream (17) from the same source (1, 2) is increased at the earliest by a third time (d₃) after the notification of the change in the data traffic (21) by the source (1, 2), with the third time (d₃) being formed from twice the predetermined time (d₁) and the second time (d₂).

4. Method according to one of Claims 1 to 3, **characterized in that** the source or sources (1, 2) knows or know the predetermined time (d₁) and the length of the time frame (t[i], i=0, 1, 2,...) of the transmitter.

5. Method according to one of Claims 2 to 4, **characterized in that** the source or sources (1, 2) knows or know the second time (d₂).

## Revendications

1. Procédé de transfert de données d'un émetteur (4) à au moins un récepteur (3), l'émetteur (4) étant doté d'un système fixe à tranche de temps (t[i], i=0, 1, 2,...), plusieurs flux de données (12, 13, 14, 16, 17) provenant de différentes sources (1, 2) étant transférés par l'émetteur (4), les formations des données des flux de données (12, 13, 14, 16, 17) étant réparties différemment et les formations des données des flux de données (12, 13, 14, 16, 17) provenant de différentes sources (1, 2) pouvant être modifiées sans prendre en compte d'autres sources éventuelles (1, 2),
**caractérisé en ce que**
lors de la modification de la formation des données d'un flux de données (12, 13, 14, 16, 17), la modification de la formation des données est indiquée à l'émetteur (4) avant le moment de la modification (22), **en ce que** l'indication (21) relative à la modification de la formation des données du flux de données (12, 13, 14, 16, 17) est émise par l'émetteur (4) avec la section à convection suivante (22) après l'arrivée de l'indication par la source (21) et une réduction de la formation des données a lieu au plus tard après une durée donnée (d₁) suivant l'indication, la durée donnée (d₁) étant déterminée par le système fixe à tranche de temps de l'émetteur (4).

2. Procédé selon la revendication 1,
**caractérisé en ce que**
pour l'émission de l'indication de modification par l'émetteur (4) dans la section de transfert suivante, l'indication sur la modification est communiquée à l'émetteur (4) au moins après une deuxième durée (d₂) précédant la section de transfert suivante, la deuxième durée (d₂) étant la somme de tous les retards dus au système.

3. Procédé selon l'une quelconque des revendications 1 ou 2,
**caractérisé en ce qu'**
une augmentation de la formation des données d'un deuxième flux de données (17) de la même source (1, 2) est réalisée par la source (1, 2) au plus tôt après une troisième durée (d₃) suivant l'indication de la modification de la formation des données (21), la troisième durée (d₃) se composant du double de la durée donnée (d₁) et de la deuxième durée (d₂).

4. Procédé selon l'une quelconque des revendications 1 à 3,
**caractérisé en ce que**
la/les source(s) (1, 2) connaît/connaissent la durée donnée (d₁) et la longueur du système à tranche de temps (t[i), i=0, 1, 2,...) de l'émetteur.

5. Procédé selon l'une quelconque des revendications 2 à 4,
**caractérisé en ce que**
la deuxième durée (d₂) est connue de la/des source(s) (1, 2).
